Europäisches Patentamt

European Patent Office

Office européen des brevets

Numéro de publication: **0 275 830**

A1

## DEMANDE DE BREVET EUROPEEN

Numéro de dépôt: 87810761.4

Date de dépôt: 18.12.87

Int. Cl.⁴ **B65G 53/48** , B65G 53/46 , B65G 33/26

Priorité: 22.12.86 CH 5127/86

Date de publication de la demande:
27.07.88 Bulletin 88/30

Etats contractants désignés:
AT BE CH DE ES FR GB GR IT LI LU NL SE

Demandeur: RESEARCH AND CONSULTING
COMPANY AG

CH-4452 Itingen(CH)

Inventeur: **Bernstein, David M.**
4, Avenue de Frontenex
CH-1207 Genève(CH)
Inventeur: **Fleissner, Hermut**
72, Ch. de Saule
CH-1233 Bernex(CH)

Mandataire: **Dousse, Blasco et al**
7, route de Drize
CH-1227 Carouge/Genève(CH)

Dispositif pour distribuer une substance pulvérulente en quantité dosée dans un flux gazeux.

Ce dispositif comprend une trémie d'alimentation (4) débouchant dans une chambre cylindrique (5) qui renferme une brosse cylindrique (6) dont le diamètre est légèrement supérieur à celui de la chambre (5). Une ouverture (19) fait communiquer cette chambre avec un conduit de distribution (9) de la substance pulvérulente dans lequel se trouve une seconde brosse dont les poils (11) sont disposés en hélice autour d'une tige (12) et dont le diamètre est légèrement supérieur à celui du conduit (9), de sorte que les poils (6 et 11) balayent constamment l'ouverture (19) et empêchent la poudre de colmater. Un venturi (8) crée une dépression dans un conduit (10) relié à une source de gaz et dans lequel débouche le conduit de distribution (9) dont la brosse (11, 12) amène la poudre en quantité dosée dans le flux de gaz.

FIG. I

# DISPOSITIF POUR DISTRIBUER UNE SUBSTANCE PULVERULENTE EN QUANTITE DOSEE DANS UN FLUX GAZEUX

La présente invention se rapporte à un dispositif pour distribuer une substance pulvérulente en quantité dosée dans un flux gazeux. comprenant une trémie d'alimentation de ladite substance, une chambre d'alimentation cylindrique présentant une ouverture d'admission disposée au-dessous de ladite trémie, une brosse comprenant des poils disposés autour d'une tige coaxiale à l'axe longitudinal de ladite chambre d'alimentation cylindrique et dont le diamètre est légèrement supérieur à celui de cette chambre, un conduit de distribution de ladite substance communiquant avec un conduit de circulation dudit flux gazeux. une second brosse comprenant des poils disposés en hélice autour d'une tige coaxiale à l'axe longitudinal de ce conduit de distribution, et dont le diamètre est légèrement supérieur à celui de ce conduit de distribution, un passage calibré pour faire communiquer cette chambre d'alimentation avec ce conduit de distribution et des moyens d'entraînement en rotation des tiges respectives de ces deux brosses.

Un tel dispositif a déjà été décrit dans le US-A-4424896 et est destiné à fournir une quantité dosée de produit pulvérulent dans un générateur d'aérosol alimentant une installation d'inhalation utilisée pour tester l'effet des différentes substances pulvérulentes inhalées, sur des animaux de laboratoire. Certaines de ces substances sont plus ou moins collantes et tendent à s'agglomérer et à colmater les ouvertures par lesquelles elles doivent passer. Or, pour obtenir un dosage précis allant jusqu'à 5 mg d'aérosol/1 d'air avec une granulométrie de l'ordre de 3µm, l'ovuverture de passage entre la chambre d'alimentation située sous la trémie de substance pulvérulente et le conduit de distribution doit nécessairement avoir une petite section et est donc susceptible d'être facilement bouchée par de la poudre qui colmate.

Le but de la présente invention est de remédier à cet inconvénient.

A cet effet, cette invention a pour objet un dispositif pour distribuer une substance pulvérulente en quantité dosée selon la revendication 1.

Le fait que les trajectoires respectives des deux brosses situées respectivement dans la chambre d'alimentation et dans le conduit de distribution se coupent à l'intérieur du passage calibré faisant communiquer cette chambre avec ce conduit assure un balayage des parois de ce passage qui empêche la poudre de colmater. Le dessin annexé illustre, schématiquement et à titre d'exemple, une forme d'exécution du dispositif objet de la présente invention.

La Fig 1 est une vue en élévation coupée de cette forme d'exécution.

La Fig 2 est une vue partielle selon la ligne II-II de la Fig 1.

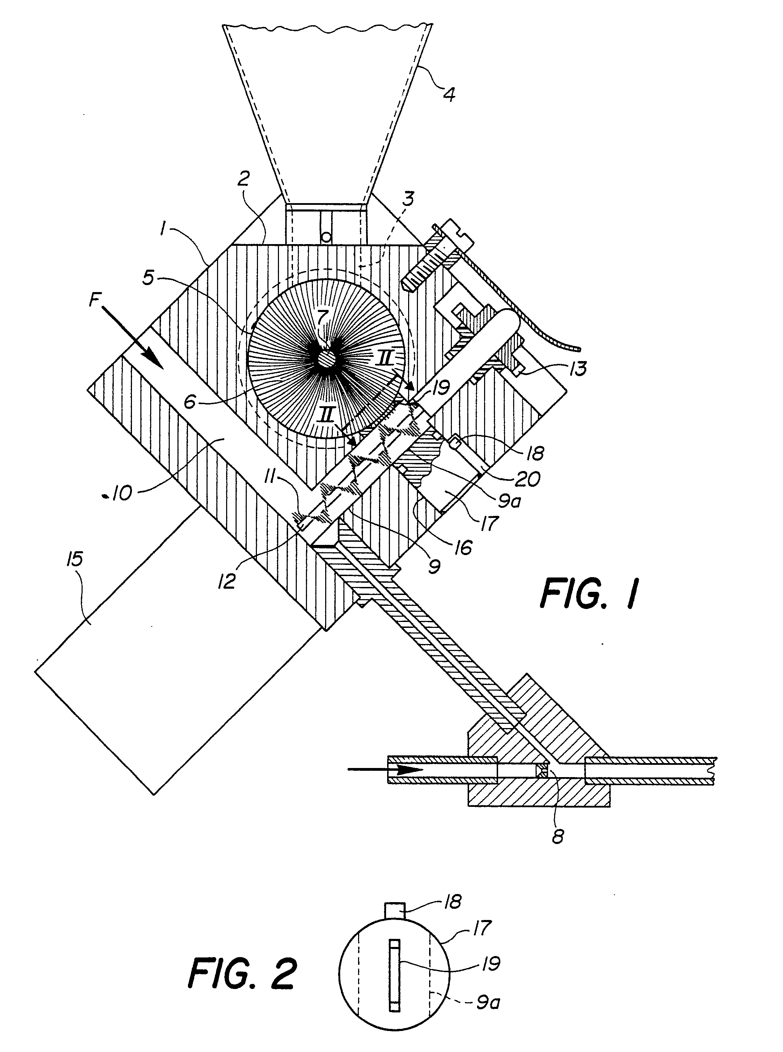

Le dispositif illustré par la Fig 1 comporte un bloc métallique 1 de section carrée dont les diagonales sont respectivement verticale et horizontale. L'angle supérieur de ce carré ainsi orienté est troqué par une face horizontale 2. Une ouverture verticale 3 ménagée dans cette face horizontale 2 relie la base d'une trémie 4 à une chambre d'alimentation 5 de forme cylindrique. Cette chambre d'alimentation 5 renferme une brosse rotative 6 dont les poils sont implantés autour d'une tige centrale 7 entrainée en rotation par un moteur non visible sur cette figure et situé dans le prolongement de la tige 7. Le diamètre de cette brosse est légèrement supérieur à celui de la chambre de sorte que ses poils prennent une forme arquée.

Un conduit de distribution 9 est ménagé dans ce bloc 1 parallèlement à l'une de ses faces. L'axe de ce conduit est orthogonal à un plan radial de la chambre d'alimentation 5 et passe à proximité de la paroi de cette chambre. Une de ses extrémités débouche dans un conduit 10 perpendiculaire au conduit de distribution 9 et qui traverse le bloc 1 parallèlement à une autre de ses faces. Ce conduit 10 est déstiné à communiquer avec une source d'aspiration constituée par un venturi 8 qui crée une circulation d'air à travers lui.

Une seconde brosse 11 comprenant des poils inplantés en hélice autour d'une tige 12 est introduite dans le conduit de distribution 9. Cette tige 12 s'étend à l'extérieur du bloc 1 et est fixée à un pignon 13 qui est en prise avec un second pignon caché sur la fig 1 par le fignon 13 et solidaire de l'arbre d'un moteur d'entrainement 15. Le diamètre de cette brosse 11 est légèrement supérieur au diamètre du conduit de distribution 9.

La face du bloc 1 parallèle et adjacente au conduit de distribution 9 est percée d'un alésage cylindrique 16. dont l'axe, perpendiculaire à cette face du bloc 1 est radial à l'axe de la chambre d'alimentation 5. Un cylindre amovible 17 est ajusté dans cet alésage par une vis de serrage (non visible) et positionné par un téton 18 engagé dans une rainure 20. Ce cylindre amovible comporte une lumière transversale 9a qui est coaxiale et de même diamètre que le conduit de distribution 9 lorsque le cylindre 17 est ajusté et positionné dans l'alésage 16. Son extrémité adjacent à la paroi de la chambre d'alimentation 5 est constituée par une portion cylindrique de même rayon que celui de la chambre 5, de sorte qu'elle épouse avec précision la paroi cylindrique de cette chambre 5 lorsque ce cylindre 17 est positionné dans l'alésage 16 par le tenon 18. Etant donné que tant la face d'extrémité interne du cylindre amovible 17 que la lumière 9a sont obtenus dans un bloc de métal par des outils de coupe, l'épaisseur minimum entre cet alésage et la face d'extrémité interne formée par une portion cylindrique peut être inférieure à 1 mm. Ceci d'autant plus que la cloison séparant la chambre 5 du conduit 9a une épaisseur croissant à partir de l'épaisseur minimum du fait que cette cloison est délimitée par deux faces concaves à génératrices orthogonales.

Un passage calibré 19 de préférence constituée par une fente parallèle à l'axe du conduit 9, est réalisée dans la cloison formée à l'extrémité interne du cylindre 17. Compte tenu du fait que ce passage 19 est située dans la partie la plus mince de cette cloison réduite à quelques dixièmes de mm et que les diamètres des brosses 6 et 11 sont légèrement supérieurs à ceux de la chambre 5 respectivement du conduit 9 les trajectoires respectives des extrémités libres de ces poils se coupent dans ce passage 19 de sorte qu'ils le balayent constamment. Par cette action, ce passage 19 n'est pas colmaté par le produit pulvérulant qui le traverse. Ce produit pulvérulant est entraîné par la brosse 6 dans le conduit de distribution 9 à travers le passage 19, où la brosse 11 l'amène dans le conduit 10. Il est alors aspiré par le courant de gaz qui le traverse dans le sens de la flèche F. La dimension du passage 19 et les vitesses respectives de rotation des brosses 6 et 11 sont choisies en fonction de la granulométrie de la substance pulvérulente, ainsi que du débit de poudre désiré. C'est ainsi que le cylindre amovible 17 peut être remplacé par toute une gamme de cylindres 17 dont les sections des passages 19 sont différentes.

Une fois que la bonne section d'ouverture 19 a été choisie en fonction de la nature de la poudre et que les vitesses de rotation respectives des brosses 6 et 11 ont été réglées en fonction du débit désiré, le dispositif décrit est apte à fonctionner pendant une durée indéterminée avec un débit constant, sans colmatage de la poudre dans le passage 19, même si celui-ci est très petit. Dans le dispositif testé, la section de cette ouverture peut aller de 0,5 à 9 mm². De préférence, la largeur du passage 19 peut varier: dans cet exemple de 0,3 à 1 mm. Avec le dispositif décrit, il est possible d'obtenir des concentrations d'aérosol allant jusqu'à 5mg par litre d'air.

## Revendications

1. Dispositif pour distribuer une substance pulvérulente en quantité dosée dans un flux gazeuz, comprenant une trémie d'alimentation de ladite substance, une chambre d'alimentation cylindrique présentant une ouverture d'admission disposée au-dessous de ladite trémie. une brosse comprenant des poils disposés autour d'une tige coaxiale à l'axe longitudinal de ladite chambre d'alimentation cylindrique et dont le diamètre est légèrement supérieur à celui de cette chambre, un conduit de distribution de ladite substance communiquant avec un conduit de circulation dudit flux gazeux, une seconde brosse comprenant des poils disposés en hélice autour d'une tige coaxiale à l'axe longitudinal de ce conduit de distribution et dont le diamètre est légèrement supérieur à celui de ce conduit de distribution, un passage calibré pour faire communiquer cette chambre d'alimentation avec ce conduit de distribution et des moyens d'entraînement en rotation des tiges respectives de ces deux brosses, caractérisé par le fait que ce conduit d'alimentation est adjacent à la chambre d'alimentation son axe longitudinal étant perpendiculaire à un plan radial de cette chambre d'alimentation, que ledit passage calibré est centré sur ce plan radial et que les trajectoires respectives des extrémités libres des poils des dites brosses se coupent dans ce passage calibré.

2. Dispositif selon la revendication 1, caractérisé par le fait que tant ladite chambre d'alimentation cylindrique que ledit conduit de distribution sont ménagés dans un bloc commun.

3. Dispositif selon la revendication 2 caractérisé par le fait qu'un alésage cylindrique débouchant dans la chambre d'alimentation est ménagé dans ledit bloc, centré sur un axe contenu dans ledit plan radial de ladite chambre et orthogonal à l'axe longitudinal du conduit de distribution, un cylindre est ajusté dans cet alésage, et présente à une extrémité une surface concave dont le rayon coïncide avec celui de ladite chambre d'alimentation et une lumière transversale, adjacente à l'extrémité présentant la surface concave, cet alésage com prenant des moyens pour positionner ce cylindre de manière que cette lumière soit alignée avec ledit conduit et que la surface concave soit centrée sur l'axe longitudinal de ladite chambre d'alimentation, ledit passage calibré reliant la face concave à ladite lumière transversale.

FIG. 1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-4 424 896 (MILLIMAN) <br> * En entier * <br> --- | 1 | B 65 G 53/48 <br> B 65 G 53/46 <br> B 65 G 33/26 |
| A | DE-C- 490 266 (POLYSIUS) <br> * Figure 1 * <br> ----- | 1 | |

DOMAINES TECHNIQUES
RECHERCHES (Int. Cl.4)

B 65 G
A 61 B

Le présent rapport a été établi pour toutes les revendications

| Lieu de la recherche | Date d'achèvement de la recherche | Examinateur |
|---|---|---|
| LA HAYE | 29-03-1988 | OSTYN T.J.M. |